# EUROPEAN PATENT APPLICATION

(11) **EP 3 991 868 A1**
(43) Date of publication of application: **04.05.2022**
(21) Application number: 20832794.0
(22) Date of filing: 26.06.2020
(51) Int. Cl.: B21D 5/02, B21D 37/02, G01B 11/24

(54) **PRESS BRAKE**

(30) Priority: 28.06.2019 JP 2019122090
(71) Applicant: Kawasaki Jukogyo Kabushiki Kaisha, Hyogo 650-8670 (JP); LVD Company NV, 8560 Gullegem (BE)
(72) Inventor: OKADA, Hideki, Hyogo, 650-8670 (JP); SHIMOSHIGE, Takuya, Hyogo, 650-8670 (JP); TYVAERT, Kristof, 8560 Gullegem (BE); CORNELUS, Alexander, 8560 Gullegem (BE)
(74) Representative: Leinweber & Zimmermann
(86) International application number: PCT/JP2020/025396
(87) International publication number: WO 2020/262678

(57) **Abstract**

There is provided a press brake that can improve bending accuracy. A press brake 1 includes: a conveying mechanism 2 that intermittently conveys a workpiece 90; a die 3; a punch 4 including punch elements 4a; a bending amount measuring device 8; punch element adjusting mechanisms 10; and a control device 9. The control device 9 refers to a database in accordance with the bending amount measured by the bending amount measuring device and the thickness at a position where the bending amount is measured, and corrects the positions of the punch elements corresponding to the measurement position, i.e., modifies the shape of the punch.

## Description

### Technical Field

The present invention relates to a press brake that subjects a workpiece to bending.

### Background Art

As disclosed in PTL 1, for example, it is known that a so-called partial bending method (typical air bending method) is used when subjecting a workpiece to multistage bending with a press brake. The partial bending method is a method in which when pressing the workpiece with a punch, the workpiece is bent in a state where the workpiece is not brought into contact with the bottom of a groove of a die, and a rear surface of the workpiece floats in the groove. Therefore, any curvature can be given to the workpiece by adjusting a pressing amount of the punch. As other methods, there are a bottoming method, a coining method, and the like. According to these methods, the workpiece is brought into contact with the bottom of the groove of the die by the pressing of the punch.

### Citation List

### Patent Literature

PTL 1: Japanese Laid-Open Patent Application Publication No. 2016-059935

### Summary of Invention

### Technical Problem

According to conventional press brakes, problems occur when giving a bent shape having uniform curvature to a workpiece having non-uniform thickness.

Specifically, relatively large pressing force needs to be applied to a portion having relatively thicker workpiece, and relatively small pressing force is only required to be applied to a portion having relatively thinner workpiece. Moreover, the target bending angle can be achieved with a small stroke amount due to small springback if the workpiece is thicker. Furthermore, the target bending angle can be achieved with a large stroke amount due to big springback if the workpiece is thicker. In addition, in the case of a workpiece having non-uniform thickness in a direction in which the punch is extended, while a portion having the maximum thickness is in contact with the punch to receive pressing force, but the punch has not yet reached a portion having thinner thickness, pressing force has not yet been applied to the portion having the thinner thickness.

Considering these factors, it is extremely difficult to determine how much the stroke of the punch should be set for a workpiece with a non-uniform thickness, especially in the direction in which the punch is extended, and for example, it is extremely difficult to bend the workpiece with a non-uniform plate thickness to same curvature. Therefore, the actual situation is that in the case of the workpiece having non-uniform thickness, it is necessary to perform work of placing a shim having suitable thickness between the die and the thin portion of the workpiece to adjust pressing force of the punch and pressing stroke applied to respective portions of the workpiece.

However, determining the thicknesses of the shims placed at respective portions of the workpiece requires experience and technique and is therefore extremely difficult work.

An object of the present invention is to improve bending accuracy of multistage bending of a workpiece having non-uniform thickness in a direction in which a punch extends.

### Solution to Problem

A press brake according to one aspect of the present invention is a press brake that performs bending with respect to a workpiece by a die and a punch. The press brake includes: a die; a punch arranged so as to be opposed to the die and including punch elements lined up in a longitudinal direction of the die; a punch supporting portion that supports the punch; a punch driving mechanism that moves the punch and the punch supporting portion relative to the die in an upper-lower direction; position controllers that adjusts upper-lower direction positions of the punch elements relative to the punch supporting portion; a bending amount measuring device that measures a bending amount of the workpiece; a memory that stores, for each thickness of the workpiece, a correspondence relation between a pressing amount of each punch element with respect to the workpiece and the bending amount generated at the workpiece; and a control device. The control device refers to the correspondence relation stored in the memory in accordance with the bending amount of the workpiece subjected to bending and the thickness at a measurement position where the bending amount is measured. The control device controls the position controllers to correct the upper-lower direction positions of the punch elements at the measurement position, i.e., modify a shape of the punch formed by the punch elements.
The control device controls the punch driving mechanism to execute additional bending with respect to a portion of the workpiece which portion has been subjected to the bending.

According to the above configuration, since the shape of the punch is modified by individually correcting the positions of the punch elements in accordance with the bending amount measured after the bending is performed once, the bending accuracy with respect to the workpiece having non-uniform thickness can be improved.

### Advantageous Effects of Invention

According to the present invention, the bending accuracy with respect to the workpiece having non-uniform thickness can be improved.

### Brief Description of Drawings

FIG. 1A is a front view of a press brake according to Embodiment 1. FIG. 1B is a sectional view of the press brake taken along line IB-IB of FIG. 1A.
FIG. 2 is a block diagram showing a functional configuration of the press brake according to Embodiment 1.
FIG. 3 is a graph for explaining contents stored in a database.
FIG. 4 is a flow chart showing one example of control contents executed by a control device.
FIG. 5A and FIG. 5B are graphs for explaining a method of acquiring a correction value of the position of a punch element with respect to a shortage of a bending amount.
FIG. 6 is a flow chart showing one example of the control contents according to Embodiment 2.
FIG. 7A is a front view of the press brake according to Embodiment 3. FIG. 7B is a sectional view of the press brake taken along line VIIB-VIIB of FIG. 7A.
FIG. 8 is a block diagram showing a functional configuration of the press brake according to Embodiment 3.
FIG. 9A to FIG. 9C are schematic diagrams showing three phases in forming of a workpiece.

### Description of Embodiments

Hereinafter, embodiments will be described with reference to the drawings.

### Embodiment 1

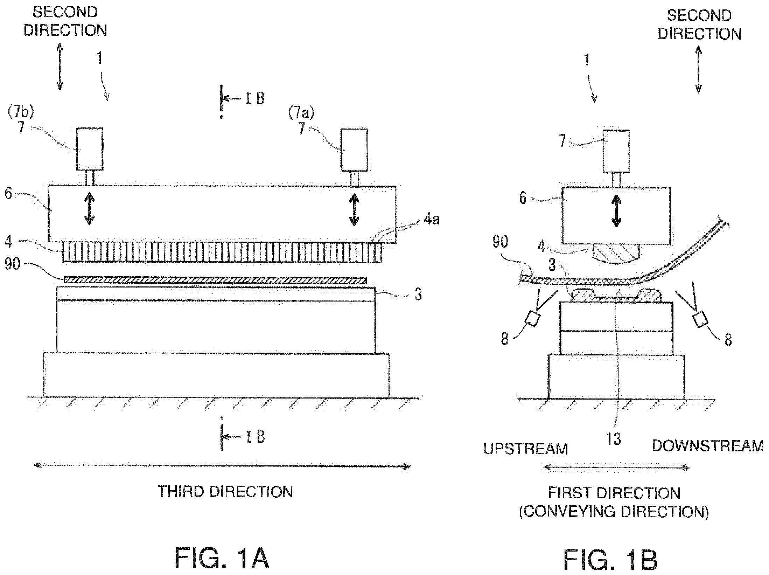

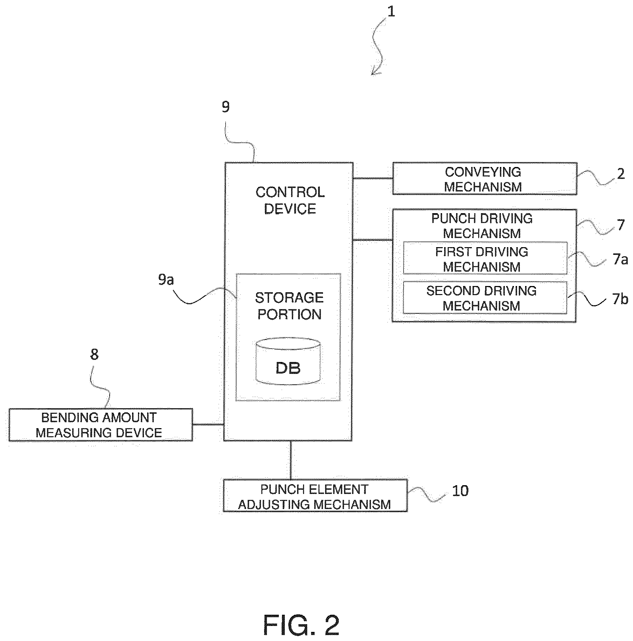

FIG. 1A is a front view of a press brake 1 according to Embodiment 1. FIG. 1B is a sectional view taken along line IB-IB of FIG. 1A. FIG. 2 is a block diagram showing a functional configuration of the press brake 1 according to Embodiment 1.

The press brake 1 shown in FIG. 1 and FIG. 2 can perform multistage bending with respect to a plate-shaped workpiece 90 that is long and wide. By combining the workpieces 90 subjected to the multistage bending, a circular tube body having a relatively large diameter can be formed.

The press brake 1 includes a conveying mechanism (conveying device) 2, a die 3, a punch 4, a punch supporting portion 6, a punch driving mechanism (punch driving device) 7, a bending amount measuring device 8, punch element adjusting mechanisms (punch element adjusting devices; position controllers) 10, and a control device 9. Hereinafter, a direction in which the workpiece 90 is conveyed by the conveying mechanism 2 is referred to as a "first direction" or simply a "conveying direction." An upstream side in the conveying direction is referred to as an "upstream side in the first direction," and a downstream side in the conveying direction is referred to as a "downstream side in the first direction." A movement direction in which the punch supporting portion 6 approaches or separates from the die 3 is referred to as a "second direction" or an "upper-lower direction." A direction orthogonal to both the first direction and the second direction is referred to as a "third direction" or a "die longitudinal direction."

The conveying mechanism 2 intermittently conveys the workpiece 90 in the conveying direction (workpiece longitudinal direction) that is the first direction. A specific configuration of the conveying mechanism 2 is not especially limited. The conveying mechanism 2 may be comprised by a conveyor, a robot including a hand at a tip of a robot arm, or the like. The die 3 is long in the third direction (die longitudinal direction) and includes a groove portion 13 having a U-shaped section, a V-shaped section, or the like in a plane orthogonal to the die longitudinal direction. According to need, urethane or the like may be disposed between the die 3 and the workpiece 90, or a plate with which the workpiece 90 is brought into contact may be disposed.

In the press brake 1 shown in FIG. 1A and FIG. 1B, the first direction (conveying direction) and the third direction (die longitudinal direction) are within a horizontal plane and are orthogonal to each other. Moreover, in the present embodiment, the workpiece 90 is placed on the press brake 1 such that at least in the vicinity of a portion supported by the die 3, a longitudinal direction of the workpiece 90 coincides with the conveying direction, and a width direction of the workpiece 90 coincides with the third direction. However, the direction of the workpiece 90 placed on the press brake 1 is not limited to this. For example, the workpiece 90 may be placed on the press brake 1 such that the longitudinal direction of the workpiece 90 coincides with the third direction, and the width direction of the workpiece 90 coincides with the conveying direction. Or, the workpiece 90 may be placed on the press brake 1 in another direction in accordance with the direction of the bending given to the workpiece 90. Moreover, the punch 4 is located so as to be opposed to the die 3 in an upper-lower direction orthogonal to both the conveying direction and the third direction. In the present embodiment, the second direction is the "upper-lower direction," and the punch 4 is arranged above the die 3.

Therefore, the groove portion 13 of the die 3 is open upward as shown in FIG. 1B and extends in the die longitudinal direction at an upper portion of the die 3. The sectional shape of the groove portion 13, the dimension of the opening portion in the conveying direction, the depth of the opening portion, and the like are suitably selected.

The punch 4 is supported by a lower portion of the punch supporting portion 6 arranged above the die 3 and is opposed to the die 3 in the second direction (upper-lower direction). The punch driving mechanism 7 moves the punch supporting portion 6 and the punch 4 relative to the die 3 in the upper-lower direction. The punch driving mechanism 7 includes a first driving mechanism (first driving device) 7a and a second driving mechanism (second driving device) 7b which are separated from each other in the die longitudinal direction. As one example, each of the first driving mechanism 7a and the second driving mechanism 7b may be constituted by a hydraulic cylinder arranged such that a rod thereof is directed in the upper-lower direction. In this case, the first driving mechanism 7a and the second driving mechanism 7b are constituted by separate hydraulic cylinders and can independently adjust stroke amounts (rod extension amounts).

The punch 4 includes punch elements 4a lined up in the die longitudinal direction. In other words, the punch 4 is divided into the punch elements 4a in the die longitudinal direction. When viewed along the die longitudinal direction, the punch elements 4a are arranged linearly in the die longitudinal direction without deviating from each other in the conveying direction. Upper-lower direction positions of the punch elements 4a relative to the punch supporting portion 6 are individually changeable by the actions of the punch element adjusting mechanisms 10. The punch element adjusting mechanisms 10 are disposed so as to correspond to the respective punch elements 4a and can individually adjust the upper-lower direction positions of the punch elements 4a. The shape of the entire punch 4 is formed by adjusting the upper-lower direction positions of the punch elements 4a.

The bending amount measuring device 8 includes a sensor that measures a bending amount of the workpiece 90. The bending amount measuring device 8 measures, for example, the bending amounts of respective pressed portions of the workpiece 90, the pressed portions being pressed by the punch elements 4a lined up in the width direction of the workpiece 90. To realize this, in the present embodiment, the bending amount measuring device 8 includes a single sensor and a scanning mechanism (scanning device) that moves the sensor in the die longitudinal direction. The single sensor scans the workpiece 90 to measure the bending amounts of the respective pressed portions of the workpiece 90 while being moved by the scanning mechanism.

Instead of the above configuration, the bending amount measuring device may be constituted by sensors disposed so as to correspond to the respective pressed portions whose bending amounts are measured. Moreover, it is preferable to measure the bending amounts of the respective pressed portions. However, the present embodiment is not limited to this. For example, when the workpiece 90 includes a large region having uniform thickness in the die longitudinal direction, the number of measuring amounts in this region may be reduced from the number of bending amounts of all the pressed portions. Or, according to need, the number of measuring amounts may be equal to or larger than the number of pressed portions (the number of punch elements 4a).

The "bending amount" measured by the bending amount measuring device 8 may be any value and is not especially limited as long as the bending amount is a measured value regarding a contour in the longitudinal direction of the workpiece and is an index by which the degree of the bending given to the workpiece 90 can be quantitatively evaluated. Examples of such index include: a curvature radius of the workpiece 90; a chord length between two points away from each other in the longitudinal direction (circumferential direction) of the workpiece 90; an arc height corresponding to a circular arc between the two points; and a bending angle of the workpiece 90.

As one example, the sensor constituting the bending amount measuring device 8 is arranged downstream of the die 3 in the conveying direction. In addition to this, another sensor may be arranged upstream of the die 3 in the conveying direction. In the present embodiment, the sensors are arranged downstream and upstream of the die 3 in the conveying direction (see FIG. 1B).

The control device 9 controls the conveying mechanism 2, the punch driving mechanism 7, and the punch element adjusting mechanisms 10. In the present embodiment, in accordance with the bending amounts measured by the bending amount measuring device 8, the control device 9 drives the punch element adjusting mechanisms 10 to determine pressing amounts (positions) of the punch elements 4a, i.e., the shape of the punch 4.

The shape of the punch 4 (i.e., the positions of the punch elements 4a) is corrected in accordance with the bending amounts of portions of the workpiece 90, the portions corresponding to the respective punch elements 4a. Positions at which the bending amounts to be referred at the time of the correction are measured may be any positions on the workpiece 90 and are, for example, positions at an end portion (especially a downstream end portion) of the workpiece 90 in the conveying direction. Moreover, a relation between the pressing amount and the bending amount differs depending on the thickness of the workpiece 90. Therefore, a storage portion (memory) 9a of the control device 9 stores a database that defines a correspondence relation of the bending amounts with respect to the positions of the punch elements 4a for each thickness.

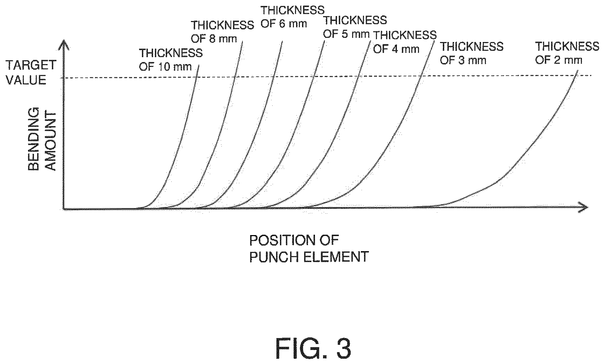

FIG. 3 is a graph for explaining contents of the database. In FIG. 3, a horizontal axis indicates the position of the punch element 4a in the upper-lower direction. As the position of the punch element 4a moves toward a right side on the horizontal axis of FIG. 3, a projecting amount (i.e., the pressing amount) of the punch element 4a from the punch supporting portion 6 toward the die 3 in the upper-lower direction increases. Moreover, a vertical axis indicates the bending amount of the workpiece 90. As shown in FIG. 3, when subjecting the workpiece having a certain thickness to the bending, the bending amount increases as the pressing amount increases. Moreover, when subjecting the workpieces having thicknesses different from each other to the bending, the larger pressing amount is required for the workpiece having smaller thickness. This is because spring back characteristics of these workpieces differ due to the thickness difference. Furthermore, when performing the bending such that uniform bending amounts are given to the workpiece (workpiece having non-uniform thickness) whose thickness is partially non-uniform, the above tendency needs to be considered. In addition, when portions having respective thicknesses different from each other are adjacent to each other, rigidities of the portions influence each other. Therefore, further complex consideration is required to determine the most suitable pressing amount. Moreover, the degree of the above tendency and the degree of the influence differ depending on Young's modulus of the workpiece. The database of the relations between the bending amounts (bending angles) and the pressing amounts for various thicknesses is made, the relations having such tendency. The database is stored in the storage portion 9a of the control device 9. More specifically, a formula or a table by which the bending amount is acquired from the pressing amount is prepared in advance for each of Young's modulus, thickness, and situations, such as surrounding environment at the time of forming and a condition of the workpiece. These may be prepared by experiments or simulation.

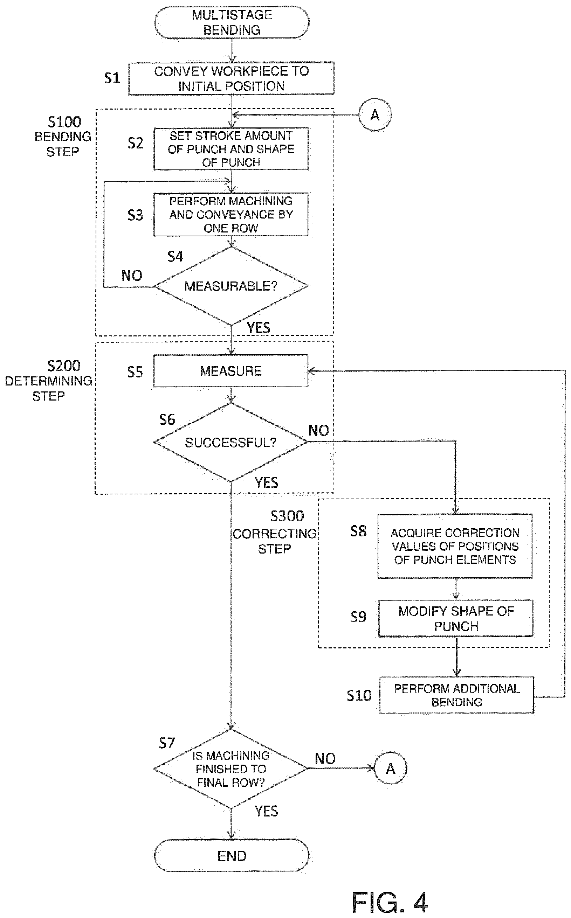

FIG. 4 is a flow chart showing the multistage bending of the workpiece, the multistage bending including modification of the shape of the punch by the control device 9. This includes a bending step (S 100), a determining step (S200), a correcting step (S300), and an additional bending step (S10) which are performed after the workpiece 90 is conveyed to an appropriate position. Hereinafter, the operation of the press brake 1 will be described.

As shown in FIG. 4, in the multistage bending of the workpiece 90, first, the workpiece 90 is conveyed to an initial position (S1). Typically, the workpiece 90 is conveyed such that the downstream end portion of the workpiece 90 in the conveying direction is located right under the punch 4. Next, in the bending step S100, each of the stroke amount of the punch 4 and the shape of the punch 4 is set to a predetermined initial value (S2).

The initial value of the stroke amount of the punch 4 is an initial value of a movement amount of the punch supporting portion 6 moved by the punch driving mechanism 7 in the upper-lower direction. The initial value of the shape of the punch 4 is an initial value of the upper-lower direction position of each punch element 4a moved by the punch element adjusting mechanism 10. For example, used as the initial value may be such a value that it is expected from a sectional dimension of the pressed portion of the workpiece 90 that a target bending amount can be realized.

The bending with respect to the end portion of the workpiece 90 in the conveying direction becomes excessive when Young's modulus is larger than an assumed value, or the thickness is larger than an assumed value. In anticipation of this, to prevent the bending from being excessively performed, the initial value of the stroke amount may be set to a value slightly smaller than such a value that it is expected that the target bending amount can be realized. For example, the initial value may be set to such a stroke amount that it is expected that the bending amount becomes around 90% (85% or more and 95% or less, for example) of the target bending amount.

Next, the pressing of the workpiece 90 and the conveyance of the workpiece 90 (S3) are repeatedly performed until the pressed portion reaches a measurement range of the bending amount measuring device 8 (S4). If the setting (S2) of the initial value of the stroke amount is performed based on the above-described latter example, the bending amount given to the workpiece 90 in the first bending step (S100) is slightly smaller than the target bending amount required for the final product. To be specific, the workpiece 90 is bent inadequately as compared to a target value.

In the first bending step (S100), it is not essential to repeatedly perform the pressing and the conveyance (S3) until the pressed portion of the workpiece 90 reaches the measurement range. For example, after the pressing and the conveyance of the workpiece 90 (S3) are repeated a predetermined number of times, only the conveyance may be performed without performing the pressing such that the pressed portion of the workpiece 90 reaches the measurement range.

When the workpiece 90 reaches the measurement range as above, the determining step (S200) is executed. In the determining step (S200), the bending amounts given to the respective portions of the workpiece 90 in the above bending step (S100) are measured (S5), and then, whether or not each of the measured bending amounts coincides with the target value (whether or not each of the measured bending amounts falls within a predetermined allowable range set based on the target value) is determined, i.e., whether each of the measured bending amounts is successful or unsuccessful is determined (S6). In the present embodiment, the bending amounts of positions lined in the die longitudinal direction and corresponding to the respective punch elements 4a in the workpiece 90 are measured.

In the measurement (S5) of the bending amounts, a shortage (differential value) of each measured bending amount from the target bending amount is also measured. In the present embodiment, as one example, at least a part of the circular tube body is assumed to be formed from the workpiece 90. In other words, since the uniform bending amount is assumed to be given to the workpiece 90 regardless of the thickness, the position in the width direction, and the position in the longitudinal direction, the target bending amount is a single value.

In the present embodiment, as described above, in the first bending step (S100), the workpiece 90 is pressed by the stroke amount that is smaller than such a stroke amount that it is expected that the target bending amount can be realized. Therefore, in this case, the measurement value of the bending amount does not fall within the allowable range in the determining step (S200), and it is determined that the measurement value of the bending amount is unsuccessful (No in S6).

If it is determined that the measurement value of the bending amount is unsuccessful, the correcting step (S300) is executed. In the correcting step, correction values regarding the positions of the punch elements 4a are acquired (S8). To be specific, the control device 9 refers to the database to acquire the correction values of the positions of the punch elements 4a in accordance with the shortages of the measured bending amounts (S8). Then, the shape of the punch 4 is modified based on the correction values (S9).

After the above procedure, the portions subjected to the bending in the previous bending step (S100) are subjected to additional bending by the punch 4 whose shape has been modified (S10). With this, the target bending amount can be surely given to the workpiece 90, and high forming accuracy can be realized in partial bending. The additional bending may be performed after the workpiece 90 is returned to the initial position, or may be performed from a final row while returning the workpiece 90 in a direction opposite to the conveying direction. Moreover, the additional bending does not have to be performed with respect to the portions subjected to the previous bending and may be performed with respect to portions to be subjected to the forming hereafter. In this case, it is unnecessary to return the workpiece 90 for the additional bending.

As a result of the successful-unsuccessful determination in Step S6 of the determining step S200, if the bending amount falls within the predetermined allowable range, it is determined that the bending amount is successful (Yes in S6). In this case, it is determined whether or not bending target rows of the workpiece 90 have been subjected to the forming to the final row, i.e., whether or not an entire bending target range has been subjected to the forming (S7). Then, when the rows of the workpiece 90 have not yet been subjected to the forming to the final row (No in S7), Step S2 and subsequent steps are executed again to perform the bending of the next row. When the rows of the workpiece 90 have already been subjected to the forming to the final row (Yes in S7), the multistage bending of FIG. 4 is terminated.

In the correcting step S300 shown in FIG. 4, only the shape of the punch 4 is modified. However, the present embodiment is not limited to this. For example, the stroke amount of the punch 4 (i.e., the stroke amount of the punch supporting portion 6 by the punch driving mechanism 7) may be corrected in addition to the modification of the shape of the punch 4, and then, the additional bending step (S10) may be executed.

Moreover, in the flow chart of FIG. 4, after the additional bending (two times bending) (S10) is executed, the bending amount is measured again (S5), and the successful-unsuccessful determination (S6) of the measurement value is performed (determining step S200). Therefore, in accordance with the result of the successful-unsuccessful determination of the pressed portion subjected to the two times bending, the additional bending step (S10) may be performed again according to need. On the other hand, if it is estimated that adequate forming accuracy can be secured by executing the two times bending (S10), the determining step (S200) after the second bending (S10) may be omitted, and the next step may be performed.

The operations shown in FIG. 4 are operations in which: the bending amounts of all the formed portions of the workpiece 90 are basically measured after the forming; the successful-unsuccessful determinations regarding whether or not the bending amounts coincide with the target value are performed; and the two times bending is performed based on the results of the determinations according to need. However, the successful-unsuccessful determination may be performed with respect to the measured bending amount of only a portion of the workpiece 90 (typically, the downstream end portion of the workpiece 90 in the conveying direction) after the forming, and the remaining bending may be performed based on the correction value obtained from the result of the determination. To be specific, in the flow chart of FIG. 4, when it is determined in Step S7 that the rows of the workpiece 90 have not yet been subjected to the forming to the final row (No in S7) after the correcting step S300, the two times bending (S10), and the determining step (S200) for the second time are performed, the conveyance and forming of the workpiece 90 may be repeatedly performed for respective rows until the forming of the final row is finished, without returning to Step S2.

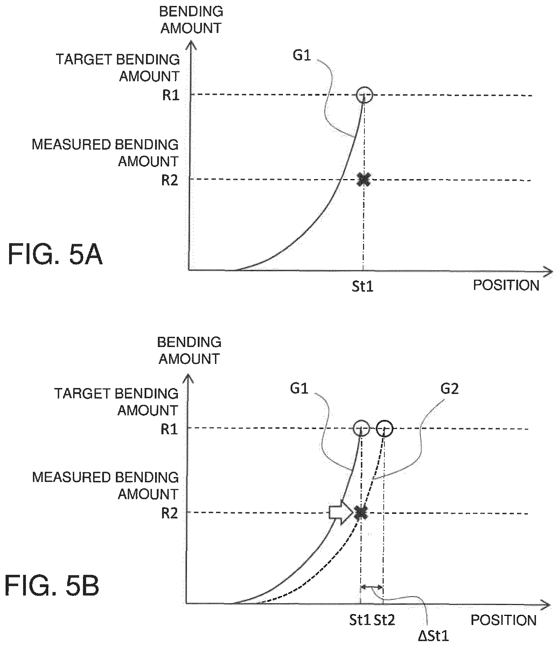

Next, the correction of the position of each punch element 4a will be more specifically described with reference to FIG. 5A and FIG. 5B. FIG. 5A and FIG. 5B are graphs for explaining a method of acquiring the correction value of the position of each punch element 4a with respect to the shortage of the bending amount.

A graph G1 shown in FIG. 5A indicates a relation between the position of one punch element 4a and the bending amount regarding a predetermined thickness and can be selected from the graphs of the respective thicknesses shown in FIG. 3. When selecting the graph, for example, regarding one punch element 4a that is a target whose stroke amount is corrected, a graph of the thickness in which the bending amount reaches a target bending amount R1 by a stroke amount St1 adopted at the time of the execution of the previous bending (S100) can be selected.

FIG. 5A shows that: one punch element 4a is set at a position St1 and is driven; and as a result, a bending amount R2 that is smaller than the target bending amount R1 is achieved at the corresponding portion of the workpiece 90. As above, if the measured bending amount R2 is smaller than the target bending amount R1, as shown in FIG. 5B, the graph G1 is parallelly moved in a positive direction of the horizontal axis until the graph G1 coincides with the position St1 and the bending amount R2. Thus, a graph G2 is prepared. Then, a differential value ΔSt1 between a position St2 corresponding to the target bending amount R1 on the graph G2 and the position St1 is acquired. The differential value ΔSt1 obtained as above can be used as the correction value of the position of the corresponding punch element 4a (i.e., the correction value of the punch element adjusting mechanism 10).

### Embodiment 2

The operations of the multistage bending described with reference to FIG. 4 in Embodiment 1 are operations in which the forming including the bending step S100, the determining step S200, the correcting step S300, and the additional bending step S10 is repeatedly performed in order for every row (press line) or every plural rows (press lines) on the workpiece 90. However, the operations of the multistage bending are not limited to these. For example, after an entire-forming target range on the workpiece 90 is subjected to the forming once (each row is subjected to the forming once), additional re-forming (may be simply called "additional bending") may be performed with respect to an inadequately bent portion(s).

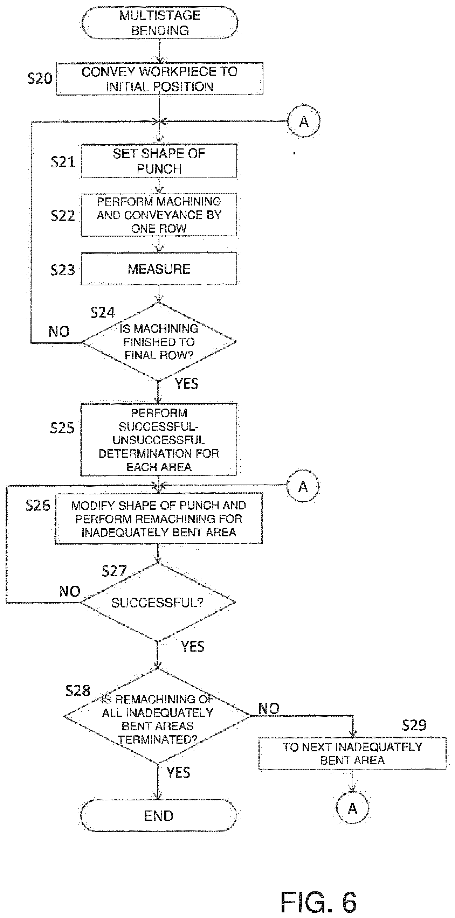

In the present embodiment, the operations of the multistage bending will be described with reference to the flow chart of FIG. 6. Control contents show in FIG. 6 can be executed by the press brake 1 described in Embodiment 1 and include the bending step (S21 to S24), the determining step (S25, S27), the correcting step, and the additional bending step (S26).

In the multistage bending of the workpiece 90 shown in FIG. 6, first, as with Step S1 of FIG. 4, the workpiece 90 is conveyed to the initial position (S20). Next, as with Steps S2 and S3 of FIG. 4, each of the stroke amount of the punch 4 and the shape of the punch 4 is set to a predetermined initial value (S21), and the pressing of the workpiece 90 and the conveyance of the workpiece 90 by a distance corresponding to one row (S22) are executed. Then, the bending amount of the workpiece 90 is measured (S23). These steps that are the setting of the shape of the punch (S21), the forming and the conveyance by the distance corresponding to one row (S22), and the measurement (S23) are repeatedly performed until the forming of the final row in the forming target range on the workpiece 90 is finished (S24). Moreover, the bending amounts measured (S23) while Steps S21 to S24 are repeatedly performed are stored in the storage portion 9a of the control device 9 each time the bending amount is measured.

Until the formed row reaches a measurable position after the multistage bending is started, Step S23 is omitted, and Steps S21, S22, and S24 are repeatedly performed. Moreover, to prevent the bending from being excessively performed, the stroke amount of the punch 4 in Steps S21 to S24 performed for the first time may be set to a value slightly smaller than such a value that it is expected that the target bending amount can be realized. For example, the initial value may be set to such a stroke amount that it is expected that the bending amount becomes around 90% (85% or more and 95% or less, for example) of the target bending amount.

Next, when the forming with respect to the entire forming target range on the workpiece 90 is terminated once (Yes in S24), whether or not each of the measured bending amounts (bending amounts stored in the storage portion 9a) coincides with the target value is determined for each area on the workpiece 90, i.e., whether each of the measured bending amounts is successful or unsuccessful is determined for each area on the workpiece 90 (S25). The area as a target unit of the successful-unsuccessful determination can be set arbitrarily as one formed row or continuous rows. For example, when one area is set for every N rows (N is any value that is one or more), a first area includes first to N-th rows, a second area includes N+1-th to 2N-th rows, and a third area includes 2N+1-th to 3N-th rows. The successful-unsuccessful determination (S25) is performed for each of these areas.

If there exists an inadequately bent area that is determined as unsuccessful as a result of the successful-unsuccessful determination in Step S25, the modification of the shape of the punch and the re-forming (S26) by the modified punch 4 are performed with respect to this area. More specifically, as with Steps S8 and S9 of the flow chart of FIG. 4, regarding the inadequately bent area, the correction values of the positions of the punch elements 4a are acquired based on the database and the shortages of the bending amounts, and the shape of the punch 4 is modified based on the correction values.

In the present embodiment, regarding this area subjected to the re-forming (S26), the bending amounts are measured again, and the successful-unsuccessful determination is performed (S27) from the same viewpoint as Step S25. If this area is unsuccessful as the result of the determination, Steps S26 and S27 are repeatedly performed. If this area is successful as the result of the determination, whether or not the re-forming of all the inadequately bent areas is terminated is determined (S28). When there exists a re-forming target area that has not yet been subjected to the re-forming (No in S28), the workpiece 90 is conveyed to a forming start position of the next inadequately bent area (S29), and Step S26 and subsequent steps are executed again. When the re-forming of all the re- forming target areas is terminated (Yes in S28), the multistage bending is terminated.

The measurement of the bending amount after the re-forming and the successful-unsuccessful determination (S27) may be omitted. For example, when it is expected with high probability that the bending amount of the area falls within a predetermined allowable range by performing the re-forming once, Step S27 is omitted, and with this, the cycle time improves as a whole.

### Embodiment 3

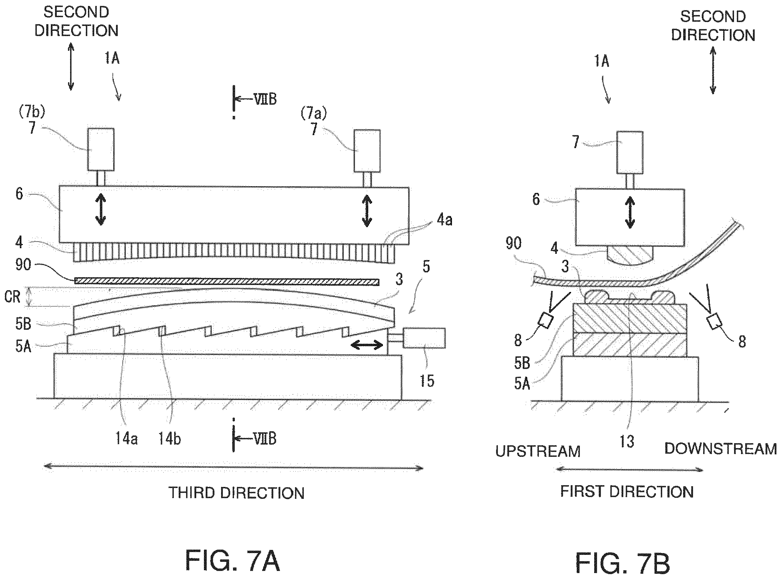

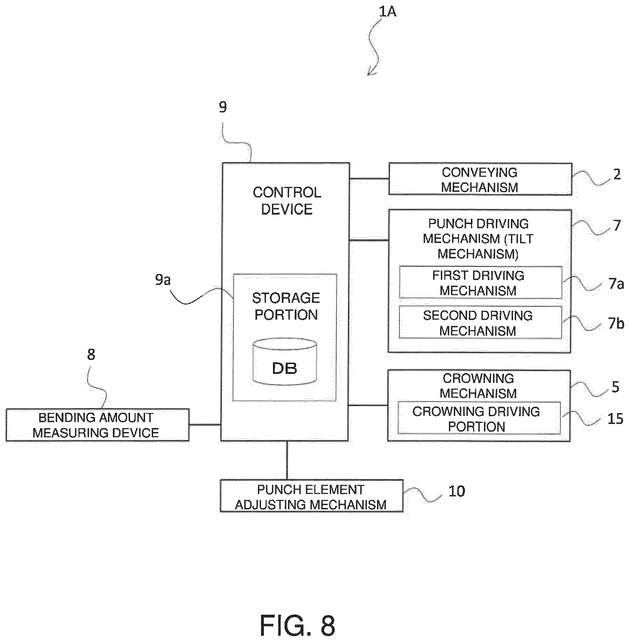

FIG. 7A is a front view of the press brake according to Embodiment 3, and FIG. 7B is a sectional view of the press brake taken along line VIIB-VIIB of FIG. 7A. FIG. 8 is a block diagram showing a functional configuration of the press brake according to Embodiment 3. A press brake 1A shown in FIG. 7 and FIG. 8 is configured such that a crowning mechanism (crowning device) 5 is added to the press brake 1 described in Embodiment 1. Except for this, the press brake 1A is the same in configuration as the press brake 1. The following will mainly describe details of portions of the press brake 1A according to Embodiment 3 which portions are different from the press brake 1 according to Embodiment 1.

As shown in FIG. 7A and FIG. 7B, in the press brake 1A, the die 3 is supported by a crowning mechanism 5. Then, the amount (hereinafter "crowning amount") of upward projection of a middle portion of the die 3 in the third direction (third direction; width direction of the workpiece 90) relative to both end portions of the die 3 is changeable by the driving of the crowning mechanism 5. To be specific, the crowning mechanism 5 is a mechanism that changes the crowning amount of the die 3.

A specific configuration of the crowning mechanism 5 is not especially limited. In the present embodiment, as one example, the configuration of a known crowning mechanism using wedge-shapes is described. According to this configuration, the crowning mechanism 5 includes a lower element 5A and an upper element 5B that are separated in the upper-lower direction. A saw teeth-shaped engaging portion 14a is formed on an upper surface of the lower element 5A, and a saw teeth-shaped engaging portion 14b is formed on a lower surface of the upper element 5B.

When the lower element 5A and the upper element 5B are moved such that the positions thereof deviate from each other in the die longitudinal direction, the upper element 5B can be partially moved relative to the lower element 5A in the upper-lower direction (second direction) by the wedging action of the engaging portions 14a and 14b, and this can change the crowning amount. In addition to the lower element 5A including the engaging portion 14a and the upper element 5B including the engaging portion 14b, the crowning mechanism 5 further includes a crowning driving portion 15 that moves the lower element 5A or the upper element 5B in the die longitudinal direction. As one example, the crowning driving portion 15 is constituted by: a servomotor and a screw mechanism; or a hydraulic cylinder.

The control device 9 of the press brake 1A according to the present embodiment controls the crowning mechanism 5 in addition to the conveying mechanism 2, the punch driving mechanism 7, and the punch element adjusting mechanisms 10. Especially, in accordance with the bending amounts measured by the bending amount measuring device 8, the control device 9 drives the punch element adjusting mechanisms 10 to modify the shape of the punch 4, drives the punch driving mechanism 7 to adjust the stroke amount of the punch 4, and drives the crowning mechanism 5 to adjust the crowning amount.

The punch driving mechanism 7 includes the first driving mechanism 7a and the second driving mechanism 7b. Therefore, by expanding or contracting the first driving mechanism 7a and the second driving mechanism 7b by the same stroke amount, the stroke amounts of the punch supporting portion 6 and the punch 4 can be changed while maintaining the postures of the punch supporting portion 6 and the punch 4. On the other hand, when the stroke amounts of the first driving mechanism 7a and the second driving mechanism 7b are made different from each other, the postures (tilt amounts and tilt angles) of the punch supporting portion 6 and the punch 4 can be changed arbitrarily. Therefore, the punch driving mechanism 7 including the first driving mechanism 7a and the second driving mechanism 7b also serves as a tilt mechanism (tilt device) (see FIG. 8).

By using the press brake 1A according to the present embodiment, in the correcting step (S300 in FIG. 4, S26 in FIG. 6), the stroke amount of the punch 4 and the shape of the punch 4 can be modified, and in addition, the tilt amount of the punch 4 and the crowning amount of the die 3 can also be corrected.

Specifically, when there is a modification amount that is common among the positions of the punch elements 4a over the entire range in the die longitudinal direction, the modification amount that is common among the punch elements 4a is adjusted by moving the punch supporting portion 6 by the punch driving mechanism 7 in the upper-lower direction. Moreover, when the modification amounts of the punch elements 4a gradually increase in the die longitudinal direction, the stroke amounts of the first driving mechanism 7a and the second driving mechanism 7b are made different from each other, and with this, the adjustment is performed by the tilting. Furthermore, when the modification amounts at the middle in the die longitudinal direction are larger than the modification amounts at both ends in the die longitudinal direction, the crowning amount is adjusted by driving the crowning mechanism 5.

A relation between the bending amount of the workpiece 90 and the tilt amount and a relation between the bending amount of the workpiece 90 and the crowning amount change in accordance with the thickness of the workpiece 90 as with the relation between the positon of the punch element 4a and the bending amount. Therefore, as with FIG. 3, the storage portion 9a of the control device 9 stores a database that defines a correspondence relation of the bending amounts with respect to the tilt amounts or the crowning amounts for each thickness.

### Other Embodiments

Other Embodiments that can coexist with each of Embodiments 1 to 3 will be described below.

### Method of Determining Position of Punch Element in Forming

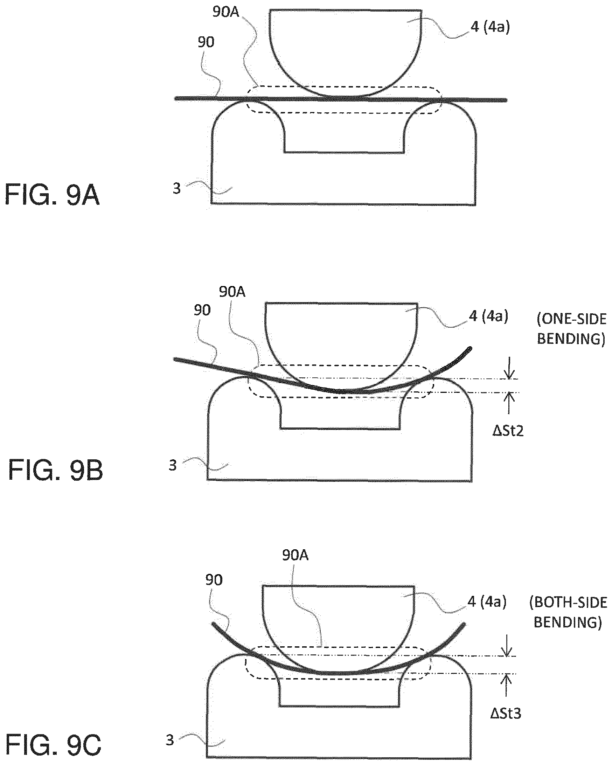

Even when the same bending amount is given to the same portion on the workpiece 90, the position of the punch element 4a may change depending on a phase in which the forming is performed. FIG. 9A to FIG. 9C are schematic diagrams showing three phases of the forming of the workpiece 90. FIG. 9A, FIG. 9B, and FIG. 9C show a first phase, a second phase, and a third phase, respectively.

For example, the first phase is a case where: at least a region (hereinafter referred to as a "workpiece supported region 90A") of the workpiece 90 which region is supported by the die 3 has not yet been subjected to forming; and one row within the workpiece supported region 90A is subjected to the pressing by the punch 4. In this case, as shown in FIG. 9A, when the forming target is the workpiece 90 having a typical flat plate shape, the workpiece supported region 90A also has a flat plate shape. The workpiece supported region 90A denotes a region between portions of the workpiece 90 which portions are respectively in contact with two shoulder portions of the die 3, the two shoulder portions being located upstream and downstream of the groove portion 13 in the conveying direction.

The second phase is a case where: the forming of the workpiece 90 is performed from the downstream side in order; and the formed row exists at the downstream side of a portion of the workpiece supported region 90A which portion is opposed to the punch 4. When the workpiece 90 originally has a flat plate shape, as shown in FIG. 9B, the downstream side of the portion opposed to the punch 4 in the workpiece supported region 90A has a curved shape since it has already been formed, and the upstream side of the portion opposed to the punch 4 in the workpiece supported region 90A has a flat plate shape since it has not been formed yet. To be specific, the bending at this time is "one-side bending."

The third phase is a case where: the workpiece 90 is subjected to the forming from the downstream side in order; the formed region is returned to the upstream side; and the re-forming is performed. In this case, the formed row may exist at each of both the downstream side and upstream side of the portion opposed to the punch 4 in the workpiece supported region 90A. Therefore, when the workpiece 90 originally has a flat plate shape, as shown in FIG. 9C, each of both the downstream side and upstream side of the portion opposed to the punch 4 in the workpiece supported region has a curved shape. To be specific, the bending at this time is "both-side bending."

As above, since the shape of the workpiece 90 differs depending on the phase of the forming, it is preferable to determine the positions of the punch elements 4a in accordance with the respective phases.

Specifically, in the second phase, a contact position of an upper surface of the workpiece 90 with which the punch 4 contacts in a state where both shoulder portions of the die 3 are in contact with the lower surface of the workpiece 90 is located lower than that in the first phase by ΔSt2 (see FIG. 9B). Therefore, when performing the forming in the second phase, it is preferable that when determining the shape of the punch 4, i.e., determining the positions of the punch elements 4a, the positions of the punch elements 4a be acquired from the database shown in FIG. 3, ΔSt2 be added to each of the positions of the punch elements 4a, and the obtained positions be set as set positions of the punch elements 4a. A specific value of ΔSt2 can be calculated based on the bending amounts (measurement values or target values; the measurement values are more preferable) of the forming rows in the workpiece supported region.

Moreover, in the third phase, a contact position of the upper surface of the workpiece 90 with which the punch 4 contacts in a state where both shoulder portions of the die 3 are in contact with the lower surface of the workpiece 90 is located lower than that in the first phase by ΔSt3 that is a difference between a contact position of the workpiece 90 and the punch element 4a in the upper-lower direction before the correction and a contact position of the workpiece 90 and the punch element 4a in the upper-lower direction after the correction (see FIG. 9C). Therefore, when performing the forming (i.e., the re-forming) in the third phase, it is preferable that when determining (modifying) the shape of the punch 4, i.e., determining (correcting) the positions of the punch elements 4a, not only a differential value (bending shortage) ΔSt1 between the target bending amount R1 and the measured bending amount R2 but also ΔSt3 described above be added to the position St1 of the punch element 4a before the correction, and the obtained position be set as a set position of the punch element 4a after the correction. A specific value of ΔSt3 can be calculated based on the bending amounts (measurement values or target values; the measurement values are more preferable) of the pressing rows in the workpiece supported region.

The foregoing has described that in the second phase, the downstream side of the portion opposed to the punch 4 in the workpiece supported region has a curved shape since it has already been formed, and the upstream side of the portion opposed to the punch 4 in the workpiece supported region has a flat plate shape since it has not been formed yet. However, more specifically, even the not-yet-formed portion that is regarded as a flat plate shape may be distorted by influence of the stress of the formed portion and is therefore slightly curved in some cases. Therefore, in order to accurately consider the change in the shape of the not-yet-formed portion due to the previous bending, it is preferable to acquire the bending amount of the not-yet-formed portion by the bending amount measuring device 8 arranged at the upstream side of the die 3. Then, in the forming when the not-yet-formed portion is included in the workpiece supported region, the positions of the punch elements 4a may be corrected based on the acquired bending amount of the not-yet-formed portion.

Moreover, when determining (correcting) the position of the punch element 4a, more suitable position determination (correction) can be performed by considering not only the thickness of a portion of the workpiece 90 which portion is formed by the punch element 4a but also the thickness of a portion adjacent to the portion formed by the punch element 4a. Specifically, in the case of determining (correcting) the position of a certain punch element 4a when a portion having thicker thickness is located adjacent to a forming target portion of the certain punch element 4a, the position determination (correction) of the certain punch element 4a may be performed on the basis that the thickness of the forming target portion of the certain punch element 4a is regarded as thicker.

### Measurement of Bending Amount

As one example, MLSL123 (produced by Wenglor) that irradiates a target with red laser light and measures a distance from reflected light to measure a bending amount can be used as the bending amount measuring device 8 that measures the bending amounts of the workpiece 90. The bending amount measuring device 8 can acquire data of 1280 pixels from one laser light irradiation range.

A protection film may be attached to a rear surface (surface faced to the bending amount measuring device 8) of the workpiece 90. In addition, part of the protection film may separate from the rear surface of the workpiece 90, or there may exist a portion where two protection films attached side by side overlap each other. In this case, the protection film does not accurately trace the shape of the rear surface of the workpiece 90. Therefore, considering that there is a possibility that the laser light from the bending amount measuring device 8 is reflected by the protection film (not the rear surface of the workpiece 90), the measurement values (distances) acquired from the reflected light may include data containing large error.

Therefore, in the measurements (S5, S23, S27) performed in the respective embodiments, the measurement value of the bending amount measuring device 8 is subjected to processing of eliminating influence of noise, and with this, more accurate bending amounts can be acquired.

Specifically, a predetermined threshold may be set, and the measurement value that exceeds the predetermined threshold may be eliminated as the noise. Then, for example, when the remaining measurement values that are not eliminated are approximated to a circular arc by the method of least squares, the bending amount within the laser light irradiation range can be obtained. The method of approximating the measurement values to the circular arc is not limited to this, and known methods may be used.

Or, moving average may be used. To be specific, in the laser light irradiation range, the measurement values of three portions spaced apart from each other in the conveying direction by a predetermined distance are used, and a circular arc passing through these three portions is acquired. While moving in the conveying direction from the portion where the first circular arc is acquired, circular arcs are acquired in order for all the portions, and an average value of all the acquired circular arcs is acquired. In this way, the amount of bending in the entire irradiation range of the laser beam can be acquired.

Or, the laser light irradiation range may be divided into zones lined up in the conveying direction (the zones may partially overlap each other), and a circular arc is acquired from the measurement values of three portions in each zone. Then, an average of the circular arcs acquired in the zones may be acquired. With this, the bending amount in the entire laser light irradiation range can be acquired.

Moreover, in addition to each of the above three methods, sensing may be performed plural times with respect to the same portion of the workpiece 90 over time, and an average value of the bending amounts acquired by the sensing may be used as the bending amount of this portion. When performing the sensing plural times, in order to eliminate influence of vibration of the workpiece 90, it is preferable to perform the sensing at a cycle that is inconsistent with natural frequency of the workpiece 90.

### Method of Acquiring Shape of Workpiece

It is preferable that the number of punch elements 4a which determine the shape of the punch 4 be larger since the shape of the punch 4 can be made to more accurately correspond to the shape of the workpiece 90. However, from the viewpoint of cost and time, as the number of punch elements 4a increases, it becomes difficult to perform the sensing of the bending amounts at the positions corresponding to all the punch elements 4a. Therefore, the measurement values of several portions lined up in the die longitudinal direction in which the punch elements 4a are lined up may be used as representative values, and linear interpolation may be performed by using the representative values. With this, the entire shape of the workpiece 90 in the die longitudinal direction may be acquired.

### Correction of Shape of Punch by Feedforward

Tolerance of property values of a material of the workpiece 90, tolerance of the thickness of the workpiece 90, slight deviation of machine origins of the press brakes 1 and 1A, and the like are specific to the workpiece 90 or the press brake 1 or 1A (although they fall within tolerance). Therefore, the modification of the shape of the punch 4 which needs to be performed due to these (i.e., the correction of the positions of the punch elements 4a) may be performed by feedforward in which the correction values acquired for the first area (for example, the first to tenth rows) in the forming target range of the workpiece 90 are reflected in the subsequent areas.

For example, when the punch 4 includes 200 punch elements 4a, the bending amounts of the first to tenth rows are measured at positions corresponding to three punch elements 4a that are the first punch element 4a, the 100th punch element 4a, and the 200th punch element 4a lined up in the die longitudinal direction. To be specific, 30 (= 3 × 10) measurement values are acquired for the downstream end portion of the workpiece 90. Then, the correction value may be determined by, for example, calculating an average of the measurement values, and the correction value may be added in the correction of the positions of the punch elements 4a in the forming of the eleventh and subsequent rows. In order to prevent excessive bending caused by the forming performed by the punch 4 whose shape has been modified, a smallest value among the 30 measurement values or a value equal to or smaller than an average value of the 30 measurement values may be adopted as the correction value.

### Others

When a width of the workpiece 90 in the die longitudinal direction is smaller than a width of the punch 4 in the die longitudinal direction, the workpiece 90 is arranged (set) such that the punch elements 4a which do not directly contribute to the forming are located outside both ends of the workpiece 90 in the die longitudinal direction. Then, such punch elements 4a located outside (hereinafter referred to as "outside punch elements 4a") may be set so as to project lower (closer to the die 3 in the second direction) than the punch elements 4a adjacently located inside (hereinafter referred to as "inside punch element 4a"). For example, the outside punch element 4a is set so as to project downward from the inside punch element 4a by a distance corresponding to a thickness of the end portion of the workpiece 90 which portion is pressed by the inside punch element 4a.

Moreover, when the outside punch elements 4a which do not directly contribute to the forming exist at an end portion of the punch 4 in the die longitudinal direction, it is preferable that the positions of the outside punch elements 4a be set as below. To be specific, the position of one outside punch element (hereinafter referred to as a "first outside punch element") 4a immediately adjacently located outside the inside punch element 4a which directly contributes to the forming is set to be the same as the position of the inside punch element 4a adjacent to the first outside punch element 4a. Then, the outside punch element (hereinafter referred to as a "second outside punch element") 4a located outside the first outside punch element 4a is set so as to project downward by the distance corresponding to the thickness of the end portion of the workpiece 90. With this, the first outside punch element 4a can be prevented from unintentionally interfering with the workpiece 90.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The foregoing has described the embodiments, but the above configuration is merely one example. Modifications, additions, and/or eliminations may be suitably made within the scope of the present invention.

### Industrial Applicability

The present invention is applicable to a press brake that subjects a workpiece to bending.

### Reference Signs List

- 1, 1A: press brake
- 2: conveying mechanism
- 3: die
- 4: punch
- 4a: punch element
- 5: crowning mechanism
- 6: punch supporting portion
- 7: punch driving mechanism
- 8: bending amount measuring device
- 9: control device
- 10: punch element adjusting mechanism

## Claims

1. A press brake that performs bending with respect to a workpiece by a die and a punch,
the press brake comprising:
a die;
a punch arranged so as to be opposed to the die and including punch elements lined up in a longitudinal direction of the die;
a punch supporting portion that supports the punch;
a punch driving mechanism that moves the punch and the punch supporting portion relative to the die in an upper-lower direction;
position controllers that adjusts upper-lower direction positions of the punch elements relative to the punch supporting portion;
a bending amount measuring device that measures a bending amount of the workpiece;
a memory that stores, for each thickness of the workpiece, a correspondence relation between a pressing amount of each punch element with respect to the workpiece and the bending amount generated at the workpiece; and
a control device, wherein:
the control device refers to the correspondence relation stored in the memory in accordance with the bending amount of the workpiece subjected to bending and the thickness at a measurement position where the bending amount is measured;
the control device controls the position controllers to correct the upper-lower direction positions of the punch elements at the measurement position, i.e., modify a shape of the punch formed by the punch elements; and
the control device controls the punch driving mechanism to execute additional bending with respect to a portion of the workpiece which portion has been subjected to the bending.

2. The press brake according to claim 1, wherein:
the control device acquires the bending amount of the workpiece subjected to the bending by the die and the punch and also acquires a bending shortage that is a difference between the bending amount and a target bending amount;
if the bending shortage is a predetermined value or more, the control device modifies the shape of the punch by correcting the upper-lower direction positions of the punch elements corresponding to the bending shortage based on the correspondence relation stored in the memory; and
the control device executes the additional bending with respect to the portion of the workpiece which portion has been subjected to the bending.

3. The press brake according to claim 1 or 2, wherein:
the control device refers to the correspondence relation stored in the memory in accordance with the measured bending amount and the thickness at the measurement position where the bending amount is measured; and
the control device corrects an upper-lower direction position of the punch supporting portion moved by the punch driving mechanism at the measurement position.

4. The press brake according to any one of claims 1 to 3, wherein the control device corrects the upper-lower direction positions of the punch elements based on the upper-lower direction positions of the punch elements before the correction, the bending shortage, and a difference between a contact position of the workpiece and each punch element in the upper-lower direction before the correction and a contact position of the workpiece and each punch element in the upper-lower direction after the correction.

5. The press brake according to any one of claims 1 to 4, further comprising a crowning mechanism that changes a crowning amount that is an amount of projection of a longitudinal-direction middle portion of the die relative to both longitudinal-direction end portions of the die in the upper-lower direction, wherein
in accordance with the measured bending amount and the thickness at the measurement position where the bending amount is measured, the control device corrects the upper-lower direction positions of the punch elements at the measurement position based on the correspondence relation stored in the memory, and also corrects the crowning amount.

6. A method of bending a workpiece with a press brake including a die and a punch, the punch including punch elements lined up in a die longitudinal direction,
the method comprising:
subjecting a predetermined range of the workpiece to bending by the die and the punch such that a preset bending amount is realized;
measuring a bending amount of the workpiece and acquiring a bending shortage of the bending amount based on a target bending amount;
determining whether or not the bending shortage falls within an allowable range;
if the bending shortage falls outside the allowable range, correcting upper-lower direction positions of the punch elements based on a correspondence relation between a pressing amount of each punch element with respect to the workpiece and the bending amount generated at the workpiece, the correspondence relation being prestored for each thickness of the workpiece; and
subjecting the predetermined range of the workpiece to additional bending by a modified shape of the punch formed by the punch elements whose upper-lower direction positions have been corrected.

7. A method of bending a workpiece with a press brake including a die and a punch, the punch including punch elements lined up in a die longitudinal direction,
the method comprising:
(A) subjecting a predetermined range of the workpiece to bending by the die and the punch such that a preset bending amount is realized;
(B) conveying the workpiece by a distance corresponding to one row;
(C) measuring a bending amount of the workpiece and acquiring a bending shortage of the bending amount based on a target bending amount;
(D) repeating the steps (A) to (C) until a final row of the workpiece;
(E) determining whether or not each bending shortage falls within an allowable range;
(F) if each bending shortage falls outside the allowable range, correcting upper-lower direction positions of the punch elements based on a correspondence relation between a pressing amount of each punch element with respect to the workpiece and the bending amount generated at the workpiece, the correspondence relation being prestored for each thickness of the workpiece; and
(G) subjecting the workpiece to additional bending by a modified shape of the punch formed by the punch elements whose upper-lower direction positions have been corrected.
